Europäisches Patentamt ·

European Patent Office

Office européen des brevets

(19)

(11) Veröffentlichungsnummer: **0 008 775**
**B1**

(12) # EUROPÄISCHE PATENTSCHRIFT

(45) Veröffentlichungstag der Patentschrift:
**01.12.82**

(21) Anmeldenummer: **79103211.3**

(22) Anmeldetag: **30.08.79**

(51) Int. Cl.³: **C 08 F 214/06,** C 08 F 210/02,
C 08 F 218/04, C 08 F 220/12,
C 08 F 2/24 // (C08F214/06,
210/02, 218/04,
220/12),(C08F210/02, 214/06,
218/04, 220/12),(C08F218/04,
210/02, 214/06,
220/12),(C08F220/12, 214/06,
210/02, 218/04)

(54) **Wässrige Äthylen-Vinylchlorid Vinylacetat und/oder Acrylester Copolymerdispersionen und ihre Herstellung.**

(30) Priorität: **31.08.78 DE 2837992**

(43) Veröffentlichungstag der Anmeldung:
**19.03.80 Patentblatt 80/6**

(45) Bekanntmachung des Hinweises auf die Patenterteilung:
**01.12.82 Patentblatt 82/48**

(84) Benannte Vertragsstaaten:
**BE CH DE FR GB IT NL SE**

(56) Entgegenhaltungen:
**FR-A-2 069 660**
**FR-A-2 135 782**
**FR-A-2 185 635**
**FR-A-2 219 184**
**GB-A-991 536**

**Die Akte enthält technische Angaben, die nach dem
Eingang der Anmeldung eingereicht wurden und die
nicht in dieser Patentschrift enthalten sind.**

(73) Patentinhaber: **WACKER-CHEMIE GMBH,
Prinzregentenstrasse 22, D-8000 München 22 (DE)**

(72) Erfinder: **Eck, Herbert, Dr. Dipl.-Chem., Burg 11,
D-8263 Burghausen (DE)**
Erfinder: **Häfener, Klaus, Marienberger Strasse 25,
D-8263 Burghausen (DE)**
Erfinder: **Wiest, Hubert, Dr. Dipl.-Chem., Schweitzer
Strasse 6, D-8263 Burghausen (DE)**

# Wässrige Äthylen-Vinylchlorid-Vinylacetat und/oder Acrylester-Copolymerdispersionen und ihre Herstellung

Bisherige Verfahren zur Herstellung von wässrigen Polymerdispersionen zielten jeweils auf die Herstellung von möglichst gleichmässiger Teilchengrösseverteilung ab. Als Faustregel kann dabei aus der DE-OS 2 252 285, Seite 12, zweiter Absatz, übernommen werden, dass «je mehr Emulgator eingesetzt wird, desto feiner werden die Teilchen». Weiterhin kann die Teilchengrösse durch Variation der Emulgator- und Schutzkolloidsysteme erreicht werden.

Weiterhin ist es bekannt, Dispersionen mit geringer Endkonzentration an Dispersionshilfsmitteln durch Einsatz von Impflatices zu erzeugen. Dabei wird häufig die für die gesamte Polymerisation zur Stabilisierung benötigte Dispersionshilfsmittelmenge bereits durch den Impflatex in die Polymerisation eingebracht. Nachteilig sind jedoch bei dieser Verfahrensweise die ungenügende Endstabilität der Dispersionen (siehe DE-OS 2 141 864) sowie die häufig langen Dosierzeiten (6 bis 18 Stunden). Zudem wird auch bei der Verwendung von Impflatices die Teilchengrösseverteilung im wesentlichen bereits vorbestimmt.

Die FR-A-2 219 184 schlägt ein Verfahren zur Herstellung von Copolymerdispersionen vor, bei dem oberflächenaktive Mittel vor Beginn der Polymerisationsreaktion dem Reaktionsgemisch zugegeben werden. Die nach diesem Verfahren hergestellten Polymerdispersionen weisen eine breite, jedoch keine bimodale Teilchengrösseverteilung auf.

In der GB-A-991 536 wird vorgeschlagen, die Copolymerisation von Vinylchlorid mit weiteren Monomeren in einer ersten Stufe ohne Emulgator zu beginnen und Emulgator erst in einer zweiten Stufe kontinuierlich zuzusetzen. Wesentliche Merkmale dieses bekannten Verfahrens, das zu Dispersionen sehr einheitlicher Teilchengrösse führt, sind das niedrige Wasser-Monomer-Gewichtsverhältnis im Bereich von 0,1 bis 0,8, das in der ersten Reaktionsstufe eingehalten werden muss, und demzufolge keinerlei Dosiermöglichkeit für Monomere.

Dispersionen mit uneinheitlicher Teilchengrösseverteilung, bei denen mindestens ein Teilchengrösseverteilungsmaximum zwischen 0,03 und 0,2 μm und das zweite Teilchengrösseverteilungsmaximum bei 0,15 bis 1 μm liegt, zeichnen sich insbesondere bei hohen Feststoffgehalten durch vergleichsweise niedrige Viskosität der Dispersionen aus. Deshalb ist es wünschenswert, stabile Polymerdispersionen zu erzeugen, die uneinheitliche Teilchengrösseverteilungsmaxima aufweisen.

Gegenstand der Erfindung sind wässrige Äthylen-Vinylchlorid-Vinylacetat- und/oder -Acrylester-Copolymerdispersionen mit uneinheitlichem Teilchengrösseverteilungsmaximum des Copolymerisats und Feststoffgehalten zwischen 20 und 70 Gew.-%, die 0,5 bis 10 Gew.-% Emulgatoren enthalten und dadurch gekennzeichnet sind, dass die Copolymerteilchen ein Teilchengrösseverteilungsmaximum bei 0,03 bis 0,2 μm und ein zweites Teilchengrösseverteilungsmaximum bei 0,15 bis 1 μm aufweisen, wobei die Masse der zur Teilchengrösseverteilungskurve des zweiten Maximums zuzurechnenden Teilchen 5 bis 60 Gew.-% der des ersten Maximums ausmacht, die einzelnen Maxima sich wenigstens um 0,1 μm voneinander unterscheiden und das Copolymere aus

a) 20 bis 95, vorzugsweise 45 bis 85 Gew.-% Vinylchlorid,

b) 5 bis 60, vorzugsweise 5 bis 30 Gew.-% Äthylen,

c) 3 bis 75, vorzugsweise 5 bis 35 Gew.-% Vinylester aliphatischer verzweigter oder unverzweigter Carbonsäuren mit 1 bis 18 Kohlenstoffatomen und/oder Acrylsäureester von aliphatischen verzweigten oder unverzweigten Alkoholen mit 1 bis 12 Kohlenstoffatomen und

d) 0 bis 15 Gew.-% weiterer copolymerisierbarer Monomeren aus der Gruppe der alpha-Olefine mit mehr als 2 Kohlenstoffatomen, Ester ungesättigter Säuren, Mono- und Diester der Fumaroder Maleinsäure mit aliphatischen $C_1$- bis $C_{12}$-Alkoholen, Ester ungesättigter Carbonsäuren mit funktionelle Gruppen enthaltenden Alkoholen, Vinylether, Vinyl- und Allylverbindungen von Silanen, (Di-)Acetylessigsäure, Glycidylalkohol, Glykolen, Aminoalkoholen, aliphatischen alpha-Chlorcarbonsäuren, Dichlortriazinen, mit Vinylchlorid und Ethylen copolymerisierbaren funktionellen Verbindungen und gut wasserlöslichen Monomeren besteht.

Ein weiterer Gegenstand der Erfindung ist das Verfahren zur Herstellung dieser wässrigen Ethylen-Vinylchlorid-Vinylacetat- und/oder -acrylester-Copolymerdispersionen mit uneinheitlichem Teilchengrösseverteilungsmaximum des Copolymerisats und Feststoffgehalten zwischen 20 und 70 Gew.-% in Gegenwart radikalischer Polymerisationsinitiatoren, in einem Verfahrensschritt bei Temperaturen zwischen 0 und 90 °C, vorzugsweise 10 und 50 °C, und Ethylendrücken zwischen 1 und 150 bar, vorzugsweise 10 bis 100 bar unter Rühren, das dadurch gekennzeichnet ist, dass abgesehen vom Ethylen und den unter d) genannten Monomeren höchstens ein Teil der Monomeren vorgelegt und der Rest dosiert wird, dass erst nach einem Umsatz von 1 bis 60 Gew.-%, vorzugsweise 1 bis 40 Gew.-%, der Gesamtmonomerenmenge die Emulgatoren in einer Menge von 0,5 bis 10 Gew.-%, vorzugsweise 2 bis 6 Gew.-%, bezogen auf Festharz, gemeinsam mit gegebenenfalls 0 bis 15 Gew.-% an Hilfsmonomeren zudosiert werden, mit der Dosierung der Emulgatoren aber spätestens bei Erreichen eines Festgehaltes von 45 Gew.-% begonnen wird.

Unter Emulgatoren werden Substanzen verstanden, die in wässrigem Medium Mizellen ausbilden können. Solche Substanzen bestehen zweckmässig aus hydrophilen und hydrophoben Gruppen. Sie setzen darüber hinaus die Oberflächenentspannung des Wassers herab und können sowohl einzeln als auch in Kombination eingesetzt werden. Sowohl nichtionogene als auch anionische Emulgatoren sind im vorliegenden Fall von Interesse. Als Beispiel werden genannt: Alkali- oder Erdalkalisalze von alkylierten Benzol- und Naphthalinsulfonsäuren, wie Natriumdodecylsulfonat, Alkalialkylsulfonate, wie z.B. Natriumlaurylsulfonat, Salze der Alkylschwefelsäuren, wie Natriumlaurylsulfat, ferner Natriumalkylsulfosuccinat bzw. Natriumalkylsulfosuccinathalb- und -vollester, Natrium oder Ammoniumsalze von Sulfatestern von Alkylphenoxlpoly(-äthoxilen)-äthanolen, wie Octyl- oder iso-Nonylphenoxipoly-(-äthoxilen)-äthanolen, sowie deren äthoxylierte Produkte, Äthylenoxidaddukte von Alkylglykolen und Alkylphenolen, Blockcopolymere aus Äthylenoxid und Propylenoxid sowie sulfonierte Fettsäureamide, Fettalkohol- oder Fettamin/ Äthylenoxidadditionsprodukte.

Die Emulgatoren werden der Polymerdispersion insgesamt in Mengen zwischen 0,5 bis 10 Gew.-%, bezogen auf Festharz, zugesetzt.

Die Feststoffgehalte der erfindungsgemässen Dispersionen können zwischen 20 und 70 Gew.-% variiert werden. Auch bei hohem Feststoffgehalt ergibt sich eine vergleichsweise niedrige Viskosität der Dispersionen.

Die erfindungsgemässen Copolymerdispersionen enthalten Copolymerteilchen, die sich auf jeweils 2 Teilchengrösseverteilungsmaxima aufteilen. Dabei macht die Masse der zur Teilchengrösseverteilungskurve des zweiten Maximums zugerechneten Teilchen 5 bis 60 Gew.-% der des ersten Maximums aus. Die Teilchengrösseverteilungsmaxima liegen bei den erfindungsgemässen Copolymerdispersionen bei 0,03 bis 0,2 µm bzw. 0,15 bis 1 µm. In manchen Fällen können darüber hinaus noch weitere Teilchengrösseverteilungsmaxima geringerer Ausprägung beobachtet werden. Die einzelnen Teilchengrösseverteilungsmaxima lassen sich wenigstens um 0,1 µm voneinander unterscheiden.

Die Polymerisation wird im allgemeinen mit Redoxkatalysatorsystemen durchgeführt. Dabei können entweder das Reduktionsmittel und das Oxidationsmittel gemäss der Reaktion dosiert werden, oder man legt das gesamte Oxidationsmittel vor und steuert die Polymerisation durch Dosierung des Reduktionsmittels. Man benötigt ca. 0,01 bis 0,5 Gew.-%, vorzugsweise 0,03 bis 0,3 Gew.-%, an Reduktionsmitteln und 0,01 bis 2 Gew.-%, vorzugsweise 0,03 bis 0,8 Gew.-%, an Oxidationsmitteln, wobei je nach Verfahren das Verhältnis von Oxidationsmittel zu Reduktionsmittel 1 bis 6 beträgt. Beispiele für die oxidierend wirkende Komponente des Katalysators sind Ammonium- oder Kaliumpersulfat, Wasserstoffperoxid, t-Butylhydroperoxid und Peroxidiphosphate, wie z.B. Kalium-, Natrium-, Ammoniumperoxdiphosphat. Beispiele für die Reduktionsmittelkomponente sind Natriumsulfit, Natriumbisulfit, Zink oder Natriumformaldehydsulfoxylat. Ebenso eignen sich $H_2$/Edelmetallkatalysatoren unter gleichzeitiger Verwendung geringer Mengen von Schwermetallsalzen als Aktivatoren. Geeignete Redoxkatalysatorsysteme sind u.a. in «Fundamental Principals of Polymerization» G.F. Alelio, John Wiley and Sons Inc., New York, 1952, auf den Seiten 333 ff. beschrieben.

Grundsätzlich ist auch die Verwendung von Radikalkatalysatoren, z.B. Persulfat oder Peroxidiphosphate in Abwesenheit eines Reduktionsmittels möglich. Sowohl bei diesem System als auch bei den vorher genannten ist die Verwendung von Beschleunigern mit z.B. Spuren von Eisensalzen möglich.

Die Copolymerisation wird im allgemeinen bei pH zwischen 2,5 und 7 durchgeführt. Der hier angegebene pH kann jedoch auch unterschritten oder überschritten werden. Der pH-Wert kann anfänglich mit kleinen Mengen von Säuren oder Basen eingestellt werden. Auch Puffersubstanzen können, um einen zu starken pH-Abfall während der Polymerisation zu verhindern, zugesetzt werden. Beispiele hierfür sind Natrium- oder Ammoniumbicarbonat, Borax, Natriumacetat und Natriumcitrat sowie Gemische primärer und sekundärer Alkaliphosphate.

Die erfindungsgemässen Latices werden nach dem Dosierverfahren hergestellt. Beim Dosierverfahren werden vorzugsweise 10 bis 30 Gew.-% des eingesetzten Vinylchlorids und der sonstigen Comonomeren ausser Äthylen und der unter weiterer copolymerisierbarer Monomerer genannten Substanzen vorgelegt, der Rest wird dosiert. Wesentlich ist die Art der Zugabe des Emulgators und ggf. der Schutzkolloide sowie deren Menge. Mit der Zugabe der Emulgatoren und ggf. geringer Mengen Schutzkolloide muss spätestens dann begonnen werden, wenn der Festgehalt der Dispersion 45 Gew.-% erreicht hat. Da dieser Zeitpunkt in der Praxis oft nur schwer bzw. verzögert bestimmt werden kann, ist anzuraten, spätestens bei einem ermittelten Festgehalt von 35 Gew.-% mit der Dosierung der Emulgatoren und ggf. geringerer Mengen Schutzkolloide zu beginnen. Dispersionen mit Festgehalten bis max. 45 Gew-% sind, falls sie nach diesem Verfahren hergestellt wurden, absitzstabil, auch wenn kein Emulgator und ggf. geringe Mengen Schutzkolloid zugegeben wurden. Anderseits sollte die Polymerisation bereits zu 1 bis 60, vorzugsweise 1 bis 40% des Gesamtumsatzes fortgeschritten sein, bevor mit der Dosierung der Emulgatoren begonnen werden kann.

Die erfindungsgemässen Latices eignen sich u.a. zum Beschichten von Papier, Geweben, wie z.B. Textilien, Glasfasern, Holz, Karton, Zement, Asbestzement usw., als Bindemittel in Farb- und Mörtelmischungen.

Durch die erfindungsgemässe Verfahrensweise wird es möglich, speziell zusammengesetzte Copolymerdispersionen mit uneinheitlichen Teilchengrösseverteilungsmaxima herzustellen. Das in der wässrigen Dispersion enthaltene Copolymere besteht aus 20 bis 95, vorzugsweise 45 bis 85 Gew.-% Vinylchlorid, 5 bis 60, vorzugsweise 5 bis 30 Gew.-% Äthylen, 3 bis 75, vorzugsweise 5 bis 35 Gew.-% Vinylester aliphatischer verzweigter oder unverzweigter Carbonsäuren mit 1 bis 18 Kohlenstoffatomen und/oder Acrylsäureestern von aliphatischen verzweigten oder unverzweigten Alkoholen mit 1 bis 12 Kohlenstoffatomen. Solche Vinylester mit aliphatischen verzweigten oder unverzweigten Carbonsäuren mit 1 bis 18 Kohlenstoffatomen sind z.B. Vinylformiat, Vinylacetat, Vinylpropionat, Vinyllaurat, Vinylstearat, Vinylisotridecanat, Vinylversatat. Als Acrylsäureester von aliphatischen verzweigten oder unverzweigten Alkoholen mit 1 bis 12 Kohlenstoffatomen seien genannt: Methyl-, Äthyl-, n- und i-Propyl-, n-Butyl-, t-Butyl-, Hexyl-, 2-Äthylhexyl-, Octyl- oder Dodecylacrylate. Als weitere copolymerisierbare Monomere in Mengen von 0 bis 15 Gew.% kommen vor allem α-Olefine mit mehr als 2 Kohlenstoffatomen, wie Propylen, Buten, Octen, Dodecen, Ester von ungesättigten Säuren, wie Crotonsäure, Methacrylsäure, Mono- oder Diester der Fumarsäure oder Maleinsäure mit aliphatischen Alkoholen mit 1 bis 12 Kohlenstoffatomen, Ester von ungesättigten Carbonsäuren mit Alkoholen, die funktionelle Gruppen enthalten, wie Glycidylalkohol, mehrbasische Alkohole, wie Äthylen-, Propylen-, Butylenglycol, Vinyläther, wie z.B. Vinyläthyl-, Vinylbutyläther, Vinyl- und -Allylverbindungen von z.B. Silanen, Acetessigsäure, Diacetylessigsäure, Glycidylalkohol, Glykolen, Aminoalkoholen, aliphatischen α-Chlorcarbonsäuren, Dichlortriazinen, sowie mit Vinylchlorid und Äthylen copolymerisierbare funktionelle Verbindungen, wie z.B. Acryltrialkoxysilane, vor. Weiterhin kann es sehr hilfreich sein, gut wasserlösliche Monomere, wie ungesättigte Carbonsäuren, wie z.B. Acrylsäure, Crotonsäure, Acrylsäureamide, Crotonsäureamide, Monovinyl- und Allylverbindungen von Di- und Polycarbonsäuren oder auch Acrylamidoglykolsäure.

Allgemeine Versuchsvorschrift 1,
Tabelle 1, Nr. 23 (Vergleichsversuche):
In dem Autoklav werden vorgelegt: Wasser 132 Teile, Genapol® X 150 7,38 Teile, Mersolat® K 30 0,17 Teile, Vinylsulfonat 0,95 Teile, Kaliumpersulfat 0,6 Teile und 0,001 Teile Ferroammonsulfat. Der pH-Wert wird mit Ameisensäure auf 3 bis 3,5 eingestellt und der Luftsauerstoff durch Stickstoff verdrängt. Nach dem Evakuieren und Einstellen der Temperaturen auf 30 °C werden unter Rühren 11,46 Teile Vinylchlorid und 3,54 Teile Vinylacetat vorgelegt und durch Äthylenzugabe ein Gleichgewichtsdruck von 48 bar eingestellt. Durch Zugabe von 0,8 Teilen/Stunde 1%iger Na-Sulfoxylatlösung in Wasser wird die Polymerisation gestartet und in gewünschtem Masse gesteuert. Bei Reaktionsbeginn werden 91,71 Teile Vinylchlorid und 28,29 Teile Vinylacetat innerhalb 9 Stunden kontinuierlich dosiert und der Druck durch Äthylenzugabe bei 48 bar gehalten. In der selben Zeit werden 1,5 Teile Acrylamid und 1,5 Teile Acrylsäure in 10 Teilen Wasser zudosiert. Der ph-Wert wird während der gesamten Polymerisationszeit mit Ammoniak bei 2,8 bis 3,5 gehalten. Am Schluss der Polymerisation wird der pH-Wert durch Zugabe von Ammoniak auf 7,0 bis 7,5 eingestellt und der Autoklav entspannt.

Allgemeine Versuchsvorschrift 2
(Vergleichsversuche):
Genaue Mengenangaben siehe Tabelle 2, Versuchsnr. 15.
$^1/_3$ der Mersolat® K 30-Menge wurde vorgelegt. Sonst wurde wie in der allgemeinen Versuchsvorschrift 1 bzw. 3 verfahren.

Allgemeine Versuchsvorschrift 3, Tabelle 3
Es wird wie in der Versuchsbeschreibung 1 verfahren. Jedoch werden die Komponenten Genapol® X 150, Mersolat® K 30 und Vinylsulfonat gleichzeitig mit dem dosierten Monomerenanteil innerhalb von 4 Stunden zudosiert, wobei mit der Dosierung erst 20 Minuten nach dem Polymerisationsbeginn der vorgelegten Comonomeren begonnen wird.

Tabelle 1
Vorlage der gesamten Emulgatormenge. Durch Änderung der Emulgatormenge, der Reaktionstemperatur, der Rührung, der Monomerenzusammensetzung und des Endfestgehaltes ist eine Teilchengrösseregulierung nicht möglich.

| Versuchs-Nr. | in % berechnet auf Comonomere ohne Äthylen | | | | |
| | Emulgatoren | | | Hilfsmonomere | |
| | Genapol® X 150 | Mersolat® K 30 | Vinylsulfonat | Acrylamid | Acrylsäure |
|---|---|---|---|---|---|
| 1 | 8,0[1] | 0,31 | 1,52 | 2,1 | 1,05 |
| 2 | 8,0[1] | 0,31 | 1,31 | 2,05 | 1,02 |
| 3 | 8,0 | 0,31 | 1,31 | 2,05 | 1,02 |
| 4 | 7,9[1] | 0,32 | 1,52 | 2,06 | 1,03 |
| 5 | 7,9 | 0,32 | 1,52 | 2,06 | 1,03 |
| 6 | 7,9 | 0,32 | 1,52 | 2,06 | 1,03 |
| 7 | 7,8 | 0,31 | 1,56 | – | 1,11 |
| 8 | 7,8 | 0,3 | 1,5 | 2,0 | 1,0 |
| 9 | 7,8 | – | 1,5 | 2,0 | 2,0 |
| 10 | 7,6 | 0,19 | 1,5 | 2,0 | 1,0 |
| 11 | 7,5 | 0,25 | 1,5 | 2,0 | 2,0 |
| 12 | 6,8 | 0,19 | 0,94 | 1,25 | 0,63 |

Tabelle 1 (Fortsetzung)

| | in % berechnet auf Comonomere ohne Äthylen | | | | |
| | Emulgatoren | | | Hilfsmonomere | |
| Versuchs-Nr. | Genapol® X 150 | Mersolat® K 30 | Vinylsulfonat | Acrylamid | Acrylsäure |
|---|---|---|---|---|---|
| 13 | 6,6[1] | 0,25 | 1,50 | 2,0 | 2,0 |
| 14 | 6,6[1] | 0,22 | 0,75 | 1,0 | 1,0 |
| 15 | 6,5 | 0,25 | 1,25 | 1,67 | 0,83 |
| 16 | 6,5 | 0,25 | 1,25 | 1,67 | 0,83 |
| 17 | 6,4 | 0,19 | 0,94 | 1,25 | 0,62 |
| 18 | 6,4 | 0,19 | 0,94 | 1,25 | 0,62 |
| 19 | 6,2 | 0,31 | 1,52 | 2,05 | 1,02 |
| 20 | 6,0 | 0,19 | 0,94 | 1,25 | 0,62 |
| 21 | 5,5 | 0,31 | 1,53 | 2,3 | 1,15 |
| 22 | 5,4 | 0,13 | 0,69 | 1,11 | 1,11 |
| 23 | 5,4 | 0,13 | 0,7 | 1,11 | 1,11 |
| 24[3] | 5,4 | 1,8 | – | – | – |
| 25 | 5,1 | 0,2 | 0,63 | 1,01 | 1,01 |
| 26 | 4,9 | 0,2 | 0,63 | 1,01 | 1,01 |
| 27 | 4,9 | 0,2 | 0,63 | 1,01 | 1,01 |
| 28 | 4,9 | 0,2 | 0,63 | 1,01 | 1,01 |
| 29 | 4,9 | 0,1 | 0,73 | 1,01 | 1,01 |
| 30 | 4,9 | 0,2 | 0,63 | 1,01 | 1,01 |
| 31 | 4,9 | 0,2 | 0,63 | 1,01 | 1,01 |
| 32 | 4,9 | 0,2 | 0,63 | 1,01 | 1,01 |
| 33 | 4,9 | 0,2 | 0,63 | 1,01 | 3,03 |
| 34 | 4,9 | 0,22 | 0,75 | 1,0 | 1,0 |
| 35 | 4,8 | 0,21 | 0,71 | 1,0 | 1,0 |
| 36 | 4,8 | 0,22 | 0,75 | 1,0 | 1,0 |
| 37 | 4,6[1] | 0,19 | 0,68 | 0,95 | 0,95 |
| 38 | 4,3[1] | 0,18 | 0,64 | – | 0,89 |
| 39 | 3,0 | 0,22 | 0,8 | 1,11 | 1,11 |
| 40 | 3,0 | 3,9[2] | 1,54 | 2,6 | 1,3 |
| 41 | 2,7 | 3,9[2] | 1,54 | 2,6 | 1,3 |
| 42 | 2,1 | 0,22 | 0,8 | 1,11 | 1,11 |
| 43· | 1,0 | 0,64 | 0,7 | 2,0 | 1,0 |

[1] = Arkopal®gemisch N 100/N 230 im Verhältnis 1 : 2
[2] = Aerosol® 22
[3] = alle Monomeren wurden vorgelegt
Die Ankerrührer 1 bis 4 unterscheiden sich in der Anzahl der Rührarme und in der Zahl der eingesetzten Wellenbrecher (1 = A 18, 2 = A 22, 3 = A 28, 4 = A 26)

Tabelle 1 (Fortsetzung)

| | Comonomere in % (ohne Äthylen = 100%) | | | Rührer | |
| Versuchs-Nr. | Vinylchlorid | Vinylacetat | % Monomertypen | UpM | Art |
|---|---|---|---|---|---|
| 1 | 84 | 16 | – | 160 | Paddel |
| 2 | 87 | 13 | – | 80 | Anker 1 |
| 3 | 87 | 13 | – | 80 | Anker 1 |
| 4 | 80 | 18 | 2 Triäthoxyvinylsilan | 170 | Anker 3 |
| 5 | 80 | 20 | – | 200 | Anker 3 |
| 6 | 80 | 20 | – | 100 | Anker 2 |
| 7 | 85 | 10 | 5 Methylolacrylamid | 100 | Anker 3 |
| 8 | 80 | 20 | – | 100 | Anker 2 |
| 9 | 87 | 13 | – | 100 | Anker 3 |
| 10 | 83 | 14 | 3 1-Allylamino-3,5-dichlorfriazin | 100 | Anker 3 |
| 11 | 87 | 13 | – | 100 | Anker 2 |
| 12 | 85 | 15 | – | 150 | Anker 3 |
| 13 | 86 | – | 14 Vinylversatat | 100 | Anker 3 |
| 14 | 71 | – | 29 Butylacrylat | 100 | Anker 3 |
| 15 | 86 | 14 | – | 150 | Anker 3 |

Tabelle 1 (Fortsetzung)

| Versuchs-Nr. | Comonomere in % (ohne Äthylen = 100%) | | | Rührer | |
| | Vinylchlorid | Vinylacetat | % Monomertypen | UpM | Art |
|---|---|---|---|---|---|
| 16 | 80 | 20 | – | 100 | Anker 2 |
| 17 | 82 | 12,3 | 5,7 N-Vinylcaprolactan | 100 | Anker 3 |
| 18 | 82 | 14,5 | 3,5 N-Methylolacrylamid | 100 | Anker 3 |
| 19 | 87 | 13 | – | 80 | Anker 1 |
| 20 | 78 | 11 | 11 Glycidylmethacrylat | 100 | Anker 3 |
| 21 | 80 | 20 | – | 70 | Anker 4 |
| 22 | 76 | 23 | 1 Crotonsäure | 100 | Anker 3 |
| 23 | 76 | 24 | – | 80 | Anker 1 |
| 24 | 44 | – | 56 Butylacrylat | 100 | Anker 3 |
| 25 | 76 | 19 | 5 Hydroxypropylacrylat | 100 | Anker 3 |
| 26 | 76 | 23 | 1 Triäthoxyacrylsilan | 100 | Anker 3 |
| 27 | 76 | 24 | – | 70 | Anker 4 |
| 28 | 76 | 24 | – | 100 | Anker 3 |
| 29 | 85 | 15 | – | 80 | Anker 3 |
| 30 | 73 | 22 | 5 Hydroxypropylacrylat | 100 | Anker 3 |
| 31 | 76 | 23 | 1 Triäthoxyvinylsilan | 100 | Anker 3 |
| 32 | 75 | 23 | 2 Triäthoxylacrylsilan | 100 | Anker 3 |
| 33 | 76 | 18 | 3 Crotonsäure | 100 | Anker 3 |
| 34 | 71 | – | 29 Butylacrylat | 100 | Anker 3 |
| 35 | 72 | – | je 14 Butyl- und Hydroxypropylacrylat | 100 | Anker 3 |
| 36 | 64 | – | 36 Butylacrylat | 100 | Anker 3 |
| 37 | 30 | 70 | – | 100 | Anker 3 |
| 38 | 30 | 69 | 1 N-Methylolacrylamid | 100 | Anker 3 |
| 39 | 76 | 24 | – | 100 | Anker 3 |
| 40 | 64 | – | 36 Butylacrylat | 100 | Anker 3 |
| 41 | 64 | – | 36 Butylacrylat | 100 | Anker 3 |
| 42 | 76 | 24 | – | 100 | Anker 3 |
| 43 | 75 | – | 27 Butylacrylat | 100 | Anker 3 |

Tabelle 1 (Fortsetzung)

| Versuchs-Nr. | Äthylendruck bar | Reaktionstemperatur °C | Endfestgehalt % | Teilchengrösse-verteilung in µm |
|---|---|---|---|---|
| 1 | 55 | 30 | 50 | 0,05–0,07 |
| 2 | 55 | 30 | 50 | 0,05–0,09 |
| 3 | 70 | 30 | 50 | 0,05–0,10 |
| 4 | 55 | 30 | 50 | 0,05–0,09 |
| 5 | 60 | 30 | 60 | 0,05–0,12 |
| 6 | 55 | 30 | 50 | 0,03–0,08 |
| 7 | 55 | 30 | 50 | 0,04–0,075 |
| 8 | 80 | 40 | 40 | 0,04–0,08 |
| 9 | 50 | 30 | 50 | 0,02–0,06 |
| 10 | 45 | 30 | 50 | 0,04–0,08 |
| 11 | 35 | 10 | 50 | 0,03–0,08 |
| 12 | 50 | 30 | 55 | 0,04–0,08 |
| 13 | 70 | 30 | 50 | 0,04–0,11 |
| 14 | 30 | 30 | 50 | 0,03–0,08 |
| 15 | 70 | 30 | 45 | 0,04–0,08 |
| 16 | 85 | 30 | 50 | 0,03–0,08 |
| 17 | 40 | 30 | 50 | 0,04–0,09 |
| 18 | 35 | 30 | 50 | 0,05–0,11 |
| 19 | 75 | 30 | 50 | 0,03–0,08 |
| 20 | 40 | 30 | 50 | 0,03–0,11 |
| 21 | 50 | 30 | 50 | 0,05–0,07 |
| 22 | 100 | 80 | 50 | 0,05–0,08 |
| 23 | 50 | 30 | 50 | 0,04–0,09 |
| 24 | 3 | 20 | 50 | 0,04–0,09 |

Tabelle 1 (Fortsetzung)

| Versuchs-Nr. | Äthylendruck bar | Reaktionstemperatur °C | Endfestgehalt % | Teilchengrösse-verteilung in µm |
|---|---|---|---|---|
| 25 | 55 | 40 | 50 | 0,03–0,11 |
| 26 | 60 | 40 | 50 | 0,06–0,11 |
| 27 | 30 | 45 | 50 | 0,04–0,11 |
| 28 | 30 | 30 | 50 | 0,05–0,08 |
| 29 | 55 | 40 | 50 | 0,06–0,10 |
| 30 | 25 | 40 | 50 | 0,04–0,08 |
| 31 | 50 | 40 | 50 | 0,05–0,10 |
| 32 | 50 | 40 | 50 | 0,04–0,08 |
| 33 | 50 | 40 | 50 | 0,05–0,11 |
| 34 | 35 | 30 | 50 | 0,04–0,08 |
| 35 | 35 | 30 | 50 | 0,06–0,09 |
| 36 | 35 | 30 | 50 | 0,05–0,11 |
| 37 | 50 | 40 | 50 | 0,06–0,11 |
| 38 | 50 | 30 | 50 | 0,06–0,11 |
| 39 | 50 | 30 | 50 | 0,05–0,09 |
| 40 | 55 | 40 | 25 | 0,04–0,09 |
| 41 | | 40 | 25 | 0,04–0,11 |
| 42 | 50 | 30 | 50 | 0,06–0,12 |
| 43 | 40 | 40 | 50 | 0,07–0,11 |

Tabelle 2

Vorlage von 0,1% Mersolat® K 30 und Dosierung der übrigen Emulgatormengen. Gegenüber der Vorlage der gesamten Emulgatormenge (Tabelle 1) ist hier eine Teilchenvergrösserung feststellbar, jedoch lässt sich die Teilchengrösse nicht regulieren.

| Versuchs-Nr. | in % berechnet auf Comonomere ohne Äthylen | | | Hilfsmonomere | |
| | Emulgatoren | | | | |
| | Genapol® X 150 | Mersolat® K 30 | Vinylsulfonat | Acrylamid | Acrylsäure |
|---|---|---|---|---|---|
| 1 | 4,8 | 0,25 | 0,56 | 0,89 | 0,89 |
| 2 | 4,6 | 0,32 | 0,73 | 1,08 | 1,08 |
| 3 | 4,6 | 0,28 | 0,68 | 0,95 | 0,95 |
| 4 | 4,6 | 0,32 | 0,81 | 1,08 | 1,08 |
| 5 | 4,3 | 0,25 | 0,56 | 0,89 | 0,89 |
| 6 | 4,3 | 0,25 | 0,56 | 0,89 | 0,89 |
| 7 | 4,3 | 0,25 | 0,56 | 0,89 | 0,89 |
| 8 | 4,3 | 0,25 | 0,56 | 0,89 | 0,89 |
| 9 | 4,3 | 0,25 | 0,56 | 0,89 | 0,89 |
| 10 | 4,3 | 0,25 | 0,56 | 0,89 | 0,89 |
| 11 | 4,3 | 0,25 | 0,56 | 0,89 | 0,89 |
| 12 | 4,3 | 0,25 | 0,56 | 0,89 | 0,89 |
| 13 | 3,8 | 0,30 | 0,73 | 1,01 | 1,01 |
| 14 | 3,8 | 0,30 | 0,73 | 1,01 | 1,01 |
| 15 | 2,7 | 0,11 | 0,63 | 0,83 | 0,83 |
| 16 | 1,25 | 0,3 | 0,8 | 1,11 | 1,11 |
| 17 | 4,9* | 0,2 | 0,63 | 1,0 | 1,0 |

* 30% vorgelegt

Tabelle 2 (Fortsetzung)

| Versuchs-Nr. | Comonomere in % (ohne Äthylen = 100%) | | | Rührer | |
| | Vinylchlorid | Vinylacetat | % Monomertypen | UpM | Art |
|---|---|---|---|---|---|
| 1 | 68 | 22 | 10 Hydroxypropylacrylat | 100 | Anker 3 |
| 2 | 76 | 24 | – | 80 | Anker 1 |
| 3 | 76 | 24 | – | 100 | Anker 3 |
| 4 | 76 | 24 | – | 80 | Anker 1 |

Tabelle 2 (Fortsetzung)

| | Comonomere in % (ohne Äthylen = 100%) | | | Rührer | |
|---|---|---|---|---|---|
| Versuchs-Nr. | Vinylchlorid | Vinylacetat | % Monomertypen | UpM | Art |
| 5 | 68 | 22 | 10 Hydroxypropylacrylat | 100 | Anker 3 |
| 6 | 68 | 22 | 10 Glycidylmethacrylat | 100 | Anker 3 |
| 7 | 67 | 33 | 0,01 Allylmethacrylat | 100 | Anker 3 |
| 8 | 67 | 33 | 0,05 Allylmethacrylat | 100 | Anker 3 |
| 9 | 67 | 33 | 0,03 Allylmethacrylat | 100 | Anker 3 |
| 10 | 68 | 30 | 2 Mono Acetessigsäureallylester | 100 | Anker 3 |
| 11 | 68 | 30 | 2 Di-Acetylessigsäureallylester | 100 | Anker 3 |
| 12 | 68 | 30 | 2 Triäthoxyvinylsilan | 100 | Anker 3 |
| 13 | 76 | 24 | – | 100 | Anker 3 |
| 14 | 76 | 24 | – | 100 | Anker 3 |
| 15 | 76 | 24 | – | 100 | Anker 3 |
| 16 | 76 | 24 | – | 100 | Anker 3 |
| 17 | 76 | 24 | – | 70 | Anker 4 |

Tabelle 2 (Fortsetzung)

| Versuchs-Nr. | Äthylendruck bar | Reaktionstemperatur °C | Endfestgehalt % | Teilchengrösse-verteilung in µm |
|---|---|---|---|---|
| 1 | 11 | 25 | 55 | 0,11–0,20 |
| 2 | 50 | 30 | 60 | 0,08–0,16 |
| 3 | 50 | 30 | 53 | 0,08–0,16 |
| 4 | 55 | 30 | 57 | 0,08–0,13 |
| 5 | 10 | 25 | 54 | 0,10–0,19 |
| 6 | 10 | 25 | 52 | 0,07–0,13 |
| 7 | 10 | 25 | 50 | 0,08–0,13 |
| 8 | 10 | 25 | 50 | 0,07–0,13 |
| 9 | 5 | 25 | 50 | 0,08–0,16 |
| 10 | 10 | 25 | 50 | 0,13–0,19 |
| 11 | 10 | 25 | 50 | 0,09–0,16 |
| 12 | 10 | 25 | 50 | 0,06–0,13 |
| 13 | 50 | 30 | 55 | 0,09–0,15 |
| 14 | 55 | 30 | 60 | 0,09–0,17 |
| 15 | 50 | 30 | 50 | 0,06–0,16 |
| 16 | 50 | 30 | Dispersion stark koagulathaltig | |
| 17 | 20 | 35 | 50 | 0,08–0,19 |

Tabelle 3

Bei der Dosierung des gesamten Emulgators lässt sich durch Reduzierung der Emulgatormenge die Teilchen-grösseverteilung regulieren. Die Harzzusammensetzung und die verwendeten Comonomeren beeinträchtigen das Verfahren nicht. Auch die Rührerart und -geschwindigkeit bringt keinen wesentlichen Einfluss. (Siehe Nr. 6 und 7.)

| | in % berechnet auf Comonomere ohne Äthylen | | | | |
|---|---|---|---|---|---|
| | Emulgatoren | | | Hilfsmonomere | |
| Versuchs-Nr. | Genapol® X 150 | Mersolat® K 30 | Vinylsulfonat | Acrylamid | Acrylsäure |
| 1[3] | 4,9 | 0,22 | 0,80 | 1,11 | 1,11 |
| 2[3] | 4,2 | 0,22 | 0,69 | 1,11 | 1,11 |
| 3 | 3,8 | 0,22 | 0,80 | 1,11 | 1,11 |
| 4 | 3,8 | 0,13 | 0,70 | 1,11 | 1,11 |
| 6 | 3,0 | 0,22 | 0,80 | 1,11 | 1,11 |
| 7 | 3,0 | 0,13 | 0,70 | 1,11 | 1,11 |
| 8 | 3,0 | 0,20 | 0,70 | 1,11 | 1,11 |
| 10 | 2,08 | 0,22 | 0,80 | 1,11 | 1,11 |
| 11[1] | 1,25 | 0,22 | 0,80 | 1,11 | 1,11 |

[1] = nach ~5% Umsatz   [3] = nach ~30% Umsatz

Tabelle 3 (Fortsetzung)

| Versuchs-Nr. | Comonomere in % (ohne Äthylen = 100%) | | | Rührer | |
| | Vinylchlorid | Vinylacetat | % Monomertypen | UpM | Art |
|---|---|---|---|---|---|
| 1 | 68 | 22 | 10 Hydroxypropylacrylat | 100 | Anker 3 |
| 2 | 86 | 14 | – | 100 | Anker 3 |
| 3 | 76 | 24 | 2 Di-Acetylessigsäureallylester | 100 | Anker 3 |
| 4 | 76 | 24 | – | 80 | Anker 1 |
| 6 | 76 | 24 | – | 100 | Anker 3 |
| 7 | 76 | 24 | – | 70 | Anker 1 |
| 8 | 76 | 24 | – | 80 | Anker 1 |
| 10 | 76 | 22 | 2 Triäthoxyvinylsilan | 100 | Anker 3 |
| 11 | 76 | 24 | – | 100 | Anker 3 |

Tabelle 3 (Fortsetzung)

| Versuchs-Nr. | Äthylendruck bar | Reaktionstemperatur °C | Endfestgehalt % | Teilchengrösse-verteilung in µm |
|---|---|---|---|---|
| 1 | 60 | 30 | 50 | 0,03–0,16 und ca. 5 Gew.-% 0,4–0,55 |
| 2 | 50 | 30 | 50 | 0,06–0,09 und ca. 5 Gew.-% 0,44–0,55 |
| 3 | 55 | 30 | 50 | 0,06–0,11 und ca. 10 Gew.-% 0,26–0,4 |
| 4 | 55 | 30 | 50 | 0,04–0,14 und ca. 5 Gew.-% 0,24–0,44 |
| 6 | 50 | 30 | 45 | 0,04–0,12 und ca. 15 Gew.-% 0,30–0,40 |
| 7 | 45 | 30 | 50 | 0,06–0,18 und ca. 15 Gew.-% 0,34–0,48 |
| 8 | 50 | 30 | 62 | 0,06–0,15 und ca. 15 Gew.-% 0,3–0,48 |
| 10 | 50 | 30 | 40 | 0,06–0,12 und ca. 30 Gew.-% 0,4–0,6 |
| 11 | 50 | 30 | 50 | 0,1–0,15 und ca. 50 Gew.-% 0,25–0,42 |

Genapol® X 150:　Isotridecanol mit ~15 Äthoxylresten veräthert
Mersolat® K 30:　Natriumsulfonat von aliphatischen Alkoholen mit ca. 13 C-Atomen
Aerosol® 22:　　Tetranatrium-N-(0,2-dicarboxyäthyl)-N-octadecyl-sulfosuccinamat
Arkopal® N 100:　Nonylphenol mit ~10 Äthoxylresten veräthert
Arkopal® N 230:　Nonylphenol mit ~23 Äthoxylresten veräthert

## Patentansprüche

1. Wässrige Äthylen-Vinylchlorid-Vinylacetat-und/oder -Acrylester-Copolymerdispersionen mit uneinheitlichem Teilchengrösseverteilungsmaximum des Copolymerisats und Feststoffgehalten zwischen 20 und 70 Gew.-%, die 0,5 bis 10 Gew.-% Emulgatoren enthalten und dadurch gekennzeichnet sind, dass die Copolymerteilchen ein Teilchengrösseverteilungsmaximum bei 0,03 bis 0,2 µm und ein zweites Teilchengrösseverteilungsmaximum bei 0,15 bis 1 µm aufweisen, wobei die Masse der zur Teilchengrösseverteilungskurve des zweiten Maximums zuzurechnenden Teilchen 5 bis 60 Gew.-% der des ersten Maximums ausmacht, die einzelnen Maxima sich wenigstens um 0,1 µm voneinander unterscheiden und das Copolymere aus

a) 20 bis 95, vorzugsweise 45 bis 85 Gew.-% Vinylchlorid,

b) 5 bis 60, vorzugsweise 5 bis 30 Gew.-% Äthylen,

c) 3 bis 75, vorzugsweise 5 bis 35 Gew.-% Vinylester aliphatischer verzweigter oder unverzweigter Carbonsäuren mit 1 bis 18 Kohlenstoffatomen und/oder Acrylsäureester von aliphatischen verzweigten oder unverzweigten Alkoholen mit 1 bis 12 Kohlenstoffatomen und

d) 0 bis 15 Gew.-% weiterer copolymerisierbarer Monomeren aus der Gruppe der alpha-Olefine mit mehr als 2 Kohlenstoffatomen, Ester ungesättigter Säuren, Mono- und Diester der Fumar-oder Maleinsäure mit aliphatischen $C_1$- bis $C_{12}$-Alkoholen, Ester ungesättigter Carbonsäuren mit funktionelle Gruppen enthaltenden Alkoholen, Vinylether, Vinyl- und Allylverbindungen von Silanen, (Di-)Acetylessigsäure, Glycidylalkohol, Glykolen, Aminoalkoholen, aliphatischen alpha-Chlorcarbonsäuren, Dichlortriazinen, mit Vinylchlorid und Ethylen copolymerisierbaren funktionellen Verbindungen und gut wasserlöslichen Monomeren besteht.

2. Verfahren zur Herstellung von wässrigen Ethylen-Vinylchlorid-Vinylacetat- und/oder -acrylester-Copolymerdispersionen mit uneinheitlichem Teilchengrösseverteilungsmaximum des Copolymerisats und Feststoffgehalten zwischen 20 und 70 Gew.-% gemäss Anspruch 1 in Gegenwart radikalischer Polymerisationsinitiatoren, in einem Verfahrensschritt bei Temperaturen zwischen 0 und 90 °C, vorzugsweise 10 und 50 °C, und Ethylendrücken zwischen 1 und 150 bar, vorzugsweise 10 bis 100 bar, unter Rühren, das dadurch gekennzeichnet ist, dass abgesehen vom Ethylen und den unter d) genannten Monomeren höchstens ein Teil der Monomeren vorgelegt und der Rest dosiert wird, dass erst nach einem Umsatz von 1 bis 60 Gew.-%, vorzugsweise 1 bis 40 Gew.-%, der Gesamtmonomerenmenge die Emulgatoren in einer Menge von 0,5 bis 10 Gew.-%, vorzugsweise 2 bis 6 Gew.-%, bezogen auf Festharz, gemeinsam mit gegebenenfalls 0 bis 15 Gew.-% an Hilfsmonomeren zudosiert werden, mit der Dosierung der Emulgatoren aber spätestens bei Erreichen eines Festgehaltes von 45 Gew.-% begonnen wird.

**Claims**

1. Aqueous ethylene/vinyl chloride/vinyl acetate and/or acrylic ester copolymer dispersions, with a non-uniform particle size distribution maximum of the copolymer and a solids content of between 20 and 70% by weight, which dispersions contain 0.5 to 10% by weight of emulsifiers and are characterized in that the copolymer particles have one particle size distribution maximum at 0.3 to 0.2 μm and a second particle size distribution maximum at 0.15 to 1 μm, wherein the mass of particles contributing to the particle size distribution curve of the second maximum is 5 to 60% by weight of that of the first maximum, the individual maxima at least differing by 0.1 μm, and the copolymer consists of

a) 20 to 95, preferably 45 to 85, % by weight of vinyl chloride,

b) 5 to 60, preferably 5 to 30, % by weight of ethylene,

c) 3 to 75, preferably 5 to 35, % by weight of vinyl esters of aliphatic branched or unbranched carboxylic acids having 1 to 18 carbon atoms and/or of acrylic acid esters of aliphatic branched or unbranched alcohols having 1 to 12 carbon atoms, and

d) 0 to 15% weight, other copolymerizable monomers out of the group of alpha-olefins having more than 2 carbon atoms, esters of unsaturated acids, monoesters and diesters of the fumaric or maleic acid with aliphatic $C_1$ to $C_{12}$ alcohols, esters of unsaturated carboxylic acids with alcohols containing functional groups, vinyl ether, vinyl and allyl compounds of silanes, (di-)acetyl acetic acid, glycidyl alcohol, glycols, amino alcohols, aliphatic alpha chlorocarboxylic acids, dichlorotriazines, functional compounds which are copolymerizable with vinyl chloride and ethylene, and of well watersoluble monomers.

2. Process for the manufacture of aqueous ethylene/vinyl chloride/vinyl acetate and/or acrylic ester copolymer dispersions with a non-uniform particle size distribution maximum of the copolymer and a solids content of between 20 and 70% by weight according to claim 1, in the presence of radical polymerization initiators, in one process step, at temperatures between 0 and 90 °C, preferably 10 and 50 °C, and at ethylene pressures of between 1 and 150 bar, preferably 10 to 100 bar, while stirring, characterized in that apart from ethylene and the monomers mentioned in item d), maximally only a part of the monomers is present at the beginning and the rest is metered in, that only after a conversion of 1 to 60% by weight, preferably 1 to 40% by weight, of the total quantity of monomers, the emulsifiers are metered in in a quantity of 0.5 to 10% by weight, preferably 2 to 6% by weight, calculated on solid resin, together with, optionally, 0 to 15% by weight of auxiliary monomers, but that the metering in of the emulsifiers is started at the latest when a solids content of 45% by weight is reached.

**Revendications**

1. Dispersions aqueuses de copolymères d'éthylène, de chlorure de vinyle et d'acétate de vinyle et/ou d'un ester de l'acide acrylique dont la courbe de distribution des tailles des particules du copolymère présente plusieurs maximums (répartition non uniforme), dont les teneurs en matières solides sont comprises entre 20 et 70% en poids et qui contiennent de 0,5 à 10% en poids d'émulsionnants, dispersions caractérisées en ce que les particules de copolymère ont un maximum, sur la courbe de distribution des tailles des particules, situé entre 0,03 et 0,2 μm et un second maximum situé entre 0,15 et 1 μm, la masse des particules contribuant au second maximum de la courbe représentant de 5 à 60% en poids de la masse de celles qui contribuent au premier maximum et les maximums différant l'un de l'autre d'au moins 0,1 μm, et en ce que le polymère est constitué:

a) de 20 à 95% en poids, de préférence de 45 à 85%, de chlorure de vinyle,

b) de 5 à 60% en poids, de préférence de 5 à 30%, d'éthylène,

c) 3 à 75% en poids, de préférence de 5 à 35%, d'esters vinyliques d'acides carboxyliques aliphatiques, ramifiés ou non, contenant de 1 à 18 atomes de carbone et/ou d'esters acryliques d'alcools aliphatiques, ramifiés ou non, contenant de 1 à 12 atomes de carbone, et

d) de 0 à 15 % en poids d'autres monomères copolymérisables pris dans l'ensemble constitué par les α-oléfines contenant plus de 2 atomes de carbone, les esters d'acides insaturés, les mono- et di-esters de l'acide fumarique ou de l'acide maléique et d'alcools aliphatiques en $C_1$ à $C_{12}$, les esters d'acides carboxyliques insaturés et d'alcools porteurs de groupes fonctionnels, les éthers vinyliques, les dérivés vinyliques et allyliques de silanes, de l'acide acétylacétique ou diacétylacéti- que, de l'alcool glycidylique, de glycols, d'amino- alcools d'acides α-chloro-carboxyliques aliphati- ques et de dichloro-triazines, les composés fonctionnels copolymérisables avec le chlorure de vinyle et l'éthylène, et de monomères se dissolvant bien dans l'eau.

2. Procédé de préparation de dispersions aqueuses de copolymères d'éthylène, de chlorure de vinyle et d'acétate de vinyle et/ou d'un ester acrylique dont la courbe de distribution des tailles particulaires du copolymère n'est pas uniforme et dont les teneurs en matières solides sont comprises entre 20 et 70% en poids, selon la revendication 1, en présence d'amorceurs de polymérisation radicalaires, en une seule étape opératoire, à des températures comprises entre 0 et 90 °C, de préférence entre 10 et 50 °C, et sous des pressions d'éthylène comprises entre 1 et 150 bar, de préférence entre 10 et 100 bar, sous agitation, procédé caractérisé en ce qu'on ne place dès le début dans le récipient, abstraction faite de l'éthylène et des monomères cités sous d), qu'une partie des monomères et on introduit le reste progressivement, en ce qu'on n'ajoute les émulsionnants, progressivement en une quantité de 0,5 à 10% en poids, de préférence de 2 à 6% en poids, par rapport à la résine solide, éventuellement avec de 0 à 15% en poids de monomères auxiliaires, que lorsque le taux de conversion de l'ensemble des monomères a atteint une valeur comprise entre 1 et 60% en poids, de préférence entre 1 et 40% en poids, l'addition des émulsionnants étant cependant entreprise au plus tard lorsque la teneur en matières solides a atteint 45% en poids.